(19) Europäisches Patentamt
European Patent Office
Office européen des brevets

(11) **EP 3 217 805 B1**

(12) **EUROPEAN PATENT SPECIFICATION**

(45) Date of publication and mention
of the grant of the patent:
**06.10.2021 Bulletin 2021/40**

(21) Application number: **15790137.2**

(22) Date of filing: **04.11.2015**

(51) Int Cl.:
*A23G 9/32* *(2006.01)*          *A23G 9/34* *(2006.01)*
*A23G 9/42* *(2006.01)*          *A23G 9/52* *(2006.01)*

(86) International application number:
**PCT/EP2015/075744**

(87) International publication number:
**WO 2016/075016 (19.05.2016 Gazette 2016/20)**

(54) **COMPOSITION FOR PREPARING A FROZEN CONFECTION**

FLÜSSIGE ZUSAMMENSETZUNG ZUR HERSTELLUNG EINES GEFRORENEN KONFEKTS

COMPOSITION LIQUIDE POUR LA PRÉPARATION D'UNE CONFISERIE CONGELÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.11.2014 EP 14193055**

(43) Date of publication of application:
**20.09.2017 Bulletin 2017/38**

(73) Proprietor: **Unilever IP Holdings B.V.
3013 AL Rotterdam (NL)**

(72) Inventors:
• **HEDGES, Nicholas David
Bedford
Bedfordshire MK44 1LQ (GB)**
• **JUDGE, David John
Bedford
Bedfordshire MK44 1LQ (GB)**
• **KNIGHT, Penelope Eileen
Bedford
Bedfordshire MK44 1LQ (GB)**
• **WIX, Loyd
Bedford
Bedfordshire MK44 1LQ (GB)**

(74) Representative: **Askew, Sarah Elizabeth
Unilever PLC
Unilever Patent Group
Bronland 14
6708 WH Wageningen (NL)**

(56) References cited:
EP-A1- 0 519 394          WO-A1-98/23169
WO-A1-2012/110376          WO-A1-2014/029574
WO-A2-2012/016852          US-A- 3 968 266
US-A- 5 789 004          ZA-A- 9 810 254

## Description

The present invention relates to an aqueous composition in liquid form. The composition may be aerated, and may be frozen quiescently to prepare a frozen confection. The liquid composition may also be dried and subsequently rehydrated to reform the aqueous composition in liquid form. The invention also provides a method for freezing the aerated composition of the invention.

## BACKGROUND TO THE INVENTION

Usually a frozen confection is prepared in a factory, and stored and distributed from the factory to the consumer in frozen form. This has the disadvantage that much energy is required to keep the storage and distribution temperature below 0°C, or even below -10°C or -20°C, so that the consumer can consume a perfect frozen confection. Much energy can be saved by supplying and distributing a composition unfrozen and at a temperature above 0°C, and that the consumer can freeze at home, to prepare a perfect frozen confection. Such a distribution channel is much more sustainable and less energy consuming than the standard distribution channel at temperatures below 0°C. Therefore there is a need for the supply of compositions that can be distributed at temperatures higher than 0°C, and that the consumer can freeze at home to prepare a perfect frozen confection.

WO 2012/110376 A1 and WO 2014/029574 A1 relate to packaged shelf- or chilled-stable mixes of ingredients for the preparation of frozen confections. The compositions contain as emulsifier a propylene glycol monoester of fatty acid, preferably propylene glycol monostearate (PGMS).

WO 2008/009616 A2, WO 2008/009617 A1, WO 2008/009618 A2, and WO 2008/009623 A1 relate to stable foams having a controlled fine air bubble size distribution and to edible products prepared therefrom having a low fat content. The compositions preferably contain a polyglycerol ester of fatty acids (PGE).

Also WO 2012/016852 A2 relates to unfrozen packaged confectionery products for the preparation of quiescently frozen confectionery products, preferably containing a polyglycerol ester of fatty acids (PGE).

WO 98/23169 discloses an ice cream formulation that can be conveniently stored, prior to use. Also these formulations preferably contain a polyglycerol ester of fatty acids (PGE).

ZA 9810254 relates to an ice cream mix which can be stored above 0°C and which can be frozen by the consumer at home. The mix preferably contains mono- and diglycerides of fatty acids, and may also contain microcrystalline cellulose.

US 4,264,637 discloses a freezable composition containing carboxymethyl cellulose and microcrystalline cellulose, which does not contain fat or protein.

US 3,993,793 is directed to the use of a combination of microcrystalline cellulose and carboxymethyl cellulose as a stabilizer system which is particularly useful for ice cream. A liquid composition is directly frozen after preparation using conventional processing techniques.

Similarly US 5,789,004 relates to frozen desserts containing as stabilizer microcrystalline cellulose coprocessed with hydrocolloids, in particular guar gum and carboxy-methylcellulose. The compositions are frozen using regular ice cream production techniques, like dynamic freezing while aerating the compositions.

Also WO 2009/019088 A1 discloses a frozen confectionary comprising, as a stabilizer system, native rice starch, egg yolk (as a natural emulsifier) and vegetable/fruit fibres. A liquid composition is frozen soon after preparation using conventional processing techniques. Dervisoglu et al (Food Sci. Tech. Int., 12, 2, 159-164 (2006)) containing hydrocolloids like carboxymethyl cellulose, guar gum, locust bean gum, and xanthan gum and citrus fibre. Compositions are frozen after preparation using conventional processing techniques.

WO 2007/112504 A1 discloses a composition for an ice confection, comprising insoluble fibre like citrus fibre. The compositions do not contain dairy compounds and use fructose as sweetener. The composition is frozen soon after preparation using conventional processing techniques.

WO 2005/115163 A1 discloses a semi-processed product for preparing e.g. ice cream. The composition is frozen soon after preparation using conventional processing techniques.

WO 2013/109721 A1 discloses a process for obtaining citrus fibre from citrus peel, which may be used in ice cream.

## SUMMARY OF THE INVENTION

Production, distribution and storage of frozen confections costs much energy, because of the low temperatures that are required and consequently the cooling capacity. In order to substantially save on energy use, it would be very beneficial to prepare good quality compositions that can be distributed or stored at temperatures above 0°C, and that can be frozen by the consumer just before the point of consumption. Such frozen confection should have the same properties as regular frozen confections, that are frozen dynamically in a frozen confection factory. For example the structure, ice content, and size of ice crystals should be similar to the regular frozen confections. This means that the compositions should be stable with respect to structure, until the point that the compositions are frozen. Moreover such non-frozen compositions should be able to withstand pasteurisation to guarantee that the compositions are not spoiled during shelf-life. Because such compositions generally are susceptible for spoilage, due to the rich compositions for the growth of micro-organisms, the pasteurisation conditions for such compositions are generally harsh, meaning high temperatures. Such high temperatures may lead to undesired maillard reactions between sugars and proteins present in the formulations, and therewith to the formation of undesired taste, flavours, and colours. Therefore the formulations should be suitable for sterilisation, without formation of undesired tastes, flavours, or colours, and which micro- and macrostructure is stable until they are frozen.

We have met this objective by a liquid composition with a low water, fat and milk protein content, and high level of saccharide sweeteners which have been combined in such a way to create a good level of sweetness. A mixture of the saccharide sweeteners has a number average molecular weight $<M>n$ ranging from 240 to 350 gram per mole; and the total solids content ranges from 30% to 50% by weight. The composition contains as stabilising system a combination of water-insoluble cellulose-based fibres and one or more water-soluble hydrocolloids. When the composition is aerated, the emulsifier facilitates a fine bubble structure and stable aerated liquid composition. Due to the stabiliser system the aerated composition is very stable. Moreover, the stabilising system also provides a good aeratability at ambient temperatures, as compared to other stabilising systems. The ice content of the compositions when they are frozen is relatively low. Additionally, the composition can be heated for pasteurisation and sterilisation without detrimental effect on the taste and flavour of the composition. Such composition can be used to prepare an aerated composition, which is packaged, distributed and stored at temperatures above 0°C for a period of up to several months. Subsequently it can be quiescently frozen in such package, for instance by a consumer at home. The composition of the invention may also be distributed in unaerated form, such that the consumer may aerate the composition by whipping, and subsequently freeze it to a frozen confection. Moreover, the relative amounts of the ingredients in the composition of the invention also leads to a desired structure and texture, when the composition has been quiescently frozen.

A dried composition may also be formed from the liquid composition by removing the water from the liquid composition to form a composition that is largely dried and preferably in a powder form. This dried composition can then be subsequently mixed with water to rehydrate the dried composition thereby to recreate the liquid composition. This recreated liquid composition can then be subsequently aerated and frozen to form an aerated frozen confection.

Accordingly in a first aspect the invention provides a composition in liquid form comprising water; oil at a concentration ranging from 0.5% to 8% by weight;
milk protein at a concentration ranging from 0.9% to 2.5% by weight;
one or more compounds selected from monosaccharides, disaccharides, and oligosaccharides, at a concentration ranging from 32% to 40% by weight, and
wherein a mixture of the one or more compounds selected from monosaccharides,
disaccharides, and oligosaccharides has a number average molecular weight $<M>n$ ranging from 240 to 350 gram per mole; and
one or more emulsifiers; and
water-insoluble cellulose-based fibres and one or more water-soluble hydrocolloids to provide an apparent yield stress of at least 1 Pa; and wherein the total solids content ranges from 30% to 50% by weight.

In one embodiment the composition of the first aspect may have total solids at a concentration ranging from 30% to 42% by weight. In another embodiment the composition of the first aspect may have total solids at a concentration ranging from 42% to 50% by weight.

Preferably, the first aspect of the invention provides a composition according to the first aspect of the invention, containing gas bubbles at an overrun ranging from 30% to 200%.

Also disclosed, as not part of the invention, is a method for preparation of a composition according to the first aspect of the invention, comprising the steps:

a) Mixing water, oil, milk protein, one or more compounds selected from monosaccharides, disaccharides, and oligosaccharides, one or more emulsifiers, water-insoluble cellulose-based fibres and one or more water-soluble hydrocolloids;
b) Optionally homogenising the composition from step a);
c) Optionally heating the composition from step a) or b) at a temperature ranging from 70°C to 155°C during a period ranging from 1 minute to 3 seconds;
d) Homogenising the composition from step a), b), or c);
e) Optionally aerating the composition from step d); and
f) Optionally packing the composition from step d) or e) in a container and sealing the container.

The second aspect of the invention provides a method for preparation of a frozen aerated composition, wherein a composition according to the first aspect of the invention, is brought to a temperature below 0°C, preferably below -5°C, preferably between -10°C and -25°C.

The invention provides a dried composition in which the water has been removed from the liquid composition of the first aspect to provide a water content of less than 10% by weight. Preferably the water content is less than 5% by weight, more preferably less than 4% by weight, more preferably still less than 3% by weight, yet more preferably less than 2% by weight, even more preferably less than 1% by weight. This dried composition is preferably in the form of a powder.

The method for the preparation of this dried composition may comprise only steps a) to d) of the method above and a further step in which the water is removed from the liquid composition. The water is preferably removed by spray drying.

Also disclosed, as not part of the invention, is a method for the preparation of a liquid composition according to the first aspect comprising the step of adding water to the dried composition in an amount to achieve a total solids content of from 30% to 50% by weight. This recreated liquid composition can be subsequently aerated and frozen to form an aerated frozen confection by any of the means set out herein above and below. It will be appreciated that the recreated liquid composition may be treated in exactly the same manner as the liquid composition of the first aspect and therefore any preferable features of the original liquid composition apply mutatis mutandis to the recreated liquid composition where relevant.

In one embodiment this method may be used to achieve a total solids content of from 30% to 42% by weight. In another embodiment this method may be used to achieve a total solids content of from 42% to 50% by weight.

When the aerated composition of the first aspect of the invention is quiescently frozen, the resultant microstructure resembles the frozen confection structure obtained by dynamic freezing. Such microstructure deliver similar organoleptic properties and product qualities as regular dynamically frozen confection. The aerated composition of the invention has favourable properties. The first is that a fine/stable dispersion of gas can be created, that does not disproportionate, shows no significant coarsening and is prevented from separating from the composition, e.g. by creaming. Moreover, the aerated composition does not display other forms of phase separation such as syneresis.

Another advantage of our invention is that part of the conventional sucrose is replaced by other saccharides. Products, and in particular a frozen confection with a high sucrose concentration can be conceived by consumers to be too sweet. By using other saccharides, the sweetness of the compositions is reduced, while the beneficial properties of the presence of saccharides is maintained. In particular the presence of saccharides leads to a favourable structure of the frozen aerated composition.


## DETAILED DESCRIPTION OF THE INVENTION


### Tests and Definitions

All percentages, unless otherwise stated, refer to the percentage by weight (wt%).

In the context of the present invention, an average droplet or gas bubble diameter is expressed as the D4,3 value, which is the volume weighted mean diameter. Gas bubbles or droplets in a product may not be perfect spheres. The volume based bubble or droplet diameter equals the diameter of a sphere that has the same volume as a given bubble or droplet.

Ambient temperature is considered to be a temperature between about 15°C and about 40°C, preferably between 18°C and 30°C, preferably between 20°C and 25°C.

amount of agitation (e.g. shaking, stirring or sucking), as opposed to a solid or set composition. Flowable compositions include pourable compositions and semi-set compositions. The temperature at which the flowability of the composition or product is considered is the temperature at which the product is normally served. For example, flowability of a chilled product is typically determined at 5°C whereas flowability of an ambient product is typically determined at room temperature (20°C). Flowability of ice-containing products is typically determined at -10°C. Measurements are generally carried out at 1 atm pressure.

The term 'aerated' means that gas has been intentionally incorporated into a composition, for example by mechanical means. The gas can be any gas, but is preferably, in the context of food products, a food-grade gas such as air, nitrogen, nitrous oxide, or carbon dioxide. Hence the term 'aeration' is not limited to aeration using air, and encompasses the 'gasification' with other gases as well. The extent of aeration is measured in terms of 'overrun' (with unit '%'), which is defined as:

$$overrun = \frac{\text{volume of aerated product - volume of initial mix}}{\text{Volume of initial mix}} \times 100\% \qquad (1)$$

where the volumes refer to the volumes of aerated product and unaerated initial mix (from which the aerated product is made). Overrun is measured at atmospheric pressure.

The overrun of an aerated product and the volume fraction of gas in the aerated product generally relate in the following way:

$$volume\ fraction\ gas\ (in\ \%) = 100\ x\ overrun\ /\ (1 + overrun) \qquad (2)$$

The term 'oil' as used herein refers to lipids selected from triglycerides, diglycerides, monoglycerides and combinations thereof. The oil may be solid or liquid at ambient temperature. The terms 'fat' and 'oil' may be used interchangeably throughout this specification, and refer to the same type of materials. Preferably the oil in the context of this invention comprises at least 90 wt% of triglycerides, more preferably at least 95 wt%.

**Frozen confection**

As used herein, the term 'frozen confection' refers to a sweet-tasting fabricated foodstuff intended for consumption in the frozen state (i.e. under conditions wherein the temperature of the foodstuff is less than 0°C, and preferably under conditions wherein the foodstuff comprises significant amounts of ice). Typical examples of frozen confections include ice creams, water ices and sorbets.

**Saccharides and Sugar alcohols**

A 'monosaccharide' is the basic unit of a carbohydrate, and they are the simplest form of sugars. Examples of monosaccharides are glucose, and fructose. A 'disaccharide' is a chemical compound which is formed by the reaction between two monosaccharides.

As used herein, the term 'oligosaccharide' refers to saccharides with a degree of polymerisation (DP) of at least 3 to 9. 'Polysaccharides' refers to saccharides having a degree of polymerisation of at least 10. 'Sugar alcohols' are alcohols prepared from saccharides, and they are a class of the polyols. Examples of these compounds are glycerol, erythritol, xylitol, sorbitol, and lactitol.

**Saccharides and sugar alcohols molecular weight**

A method to determine the average molecular weight for sugars comprising a mixture of mono-, di- and/or oligosaccharides and/or sugar alcohols has been described by EP 1 676 486 A1. The average molecular weight is defined by the number average molecular weight $<M>_n$ (in g/mole):

$$< M >_n = \frac{\sum w_i}{\sum \left(\frac{w_i}{M_i}\right)} = \frac{\sum N_i M_i}{\sum N_i} \qquad (3)$$

Where $w_i$ is the mass of saccharide or sugar alcohol i, $M_i$ is the molar mass of saccharide or sugar alcohol i and $N_i$ is the number of moles of saccharide or sugar alcohol i of molar mass $M_i$.

Glucose syrups (or 'corn syrups' as they are sometimes called) are complex multicomponent digestible saccharides derived from starch. The dextrose equivalent (DE) is a common industrial means of classification. Since they are complex mixtures their number average molecular weight $<M>_n$ can be calculated from equation 4 (J. Chirife et al, 1997, Journal of Food Engineering, 33, p. 221-226):

$$DE = \frac{18016}{< M >_n} \qquad (4)$$

**Relative sweetness**

Generally the relative sweetness of saccharides is determined relative to sucrose. Sucrose is taken as the reference with a sweetness of 1. A 10% solution of sucrose in water has a relative sweetness of 0.1. A relative sweetness of 0.33 is equivalent to 33% sucrose in water.

The total relative sweetness (TRS) can be calculated using the following formula:

$$TRS = (MS1/100 \times RSS1) + (MS2/100 \times RSS2) + (MS3/100 \times RSS3) + \dots \qquad (5)$$

Herein MS1 is the concentration of sugar 1 in water, and RSS1 is the relative sweetness of sugar 1. Similarly for sugars 2 and 3.

Relative sweetness of some sugars: fructose = 1.7; dextrose monohydrate = 0.73; corn syrup solids 28DE = 0.077; corn syrup solids 40DE = 0.180.

For example a formulation containing 10% sucrose, 10% fructose and 10% dextrose monohydrate has the following relative sweetness:

$$TRS = 0.10 + 0.17 + 0.073 = 0.343$$

**Composition in liquid form**

In a first aspect the present invention provides a composition in liquid form comprising water; oil at a concentration ranging from 0.5% to 8% by weight; milk protein at a concentration ranging from 0.9% to 2.5% by weight; one or more compounds selected from monosaccharides, disaccharides, and oligosaccharides, at a concentration ranging from 32% to 40% by weight, and wherein a mixture of the one or more compounds selected from monosaccharides, disaccharides, and oligosaccharides has a number average molecular weight <M>n ranging from 240 to 350 gram per mole; and one or more emulsifiers; and water-insoluble cellulose-based fibres and one or more water-soluble hydrocolloids to provide an apparent yield stress of at least 1 Pa; and wherein the total solids content ranges from 30% to 50% by weight. Alternatively the total solids may be at a concentration ranging from 30% to 42% by weight or from 42% to 50% by weight.

Preferably the composition according to the invention is an edible composition. The composition is in liquid form, which means that the composition is a flowable composition. In the context of the present invention, the composition is in liquid form at a temperature above 0°C, and at these temperatures the composition is a flowable product. Preferably the composition according to the first aspect of the invention is ambient stable or chilled stable, meaning that it can be stored and kept at a temperature of at least 0°C, and preferably maximally 40°C, preferably maximally 30°C, preferably maximally 25°C. Preferably the composition is ambient stable or chilled stable during a period of at least 2 weeks, preferably at least 4 weeks, preferably at least 8 weeks. With stable is meant that the composition can be stored without noticeable or only small deterioration of quality during the storage period.

Preferably the pH of the composition ranges from 4.5 to 7.5, preferably from 6.0 to 7.5.

The composition of the invention comprises oil at a concentration ranging from 0.5% to 8% by weight. Preferably the amount of oil ranges from 0.5% to 6% by weight, more preferred from 1% to 6% by weight. Preferred oils for use in the context of this invention are vegetable oils like coconut oil and palm oil, or fractions thereof. Another preferred fat is dairy fat, preferably milk fat, preferably cow's milk fat, or fractions thereof. Also combinations of these preferred oils and fats are within the scope of the present invention. The oil may be added as pure oil, or as an element of another ingredient. For example in case dairy fat is used, cream may be added to the composition, which contains both protein and oil. In the final composition, oil is dispersed in a continuous aqueous matrix.

The concentration of milk protein ranges from 0.9% to 2.5% by weight. This amount of milk protein is relatively low, in order to prevent the formation of undesired maillard reaction product during a possible pasteurisation or sterilisation step of the composition of the invention. Preferably the concentration of milk solids excluding fat ranges from 2% to 6% by weight of the composition. The milk solids excluding fat generally may be added to the composition in the form of skimmed milk powder. Generally skimmed milk powder is dried defatted dairy milk, and generally comprises about 35% milk protein (casein and whey protein) and about 50% lactose.

Alternatively, the present invention encompasses a composition comprising all elements of the first aspect of the invention, with the exception that such composition contains milk protein and/or soy protein at a total concentration ranging from 0.9% to 2.5% by weight.

The composition of the invention comprises one or more compounds selected from monosaccharides, disaccharides, and oligosaccharides at a concentration ranging from 32% to 40% by weight, and wherein a mixture of the one or more compounds selected from monosaccharides, disaccharides, and oligosaccharides has a number average molecular weight <M>n ranging from 240 to 350 gram per mole. This combination of sugars contributes to the stability of the liquid composition and to the microstructure of the frozen composition of the invention. In case lactose is added to the composition as part of skimmed milk powder, then this lactose is also included in the calculation of the total amount of saccharides.

Preferably the composition of the invention comprises one or more compounds selected from monosaccharides, disaccharides, oligosaccharides, and sugar alcohols at a concentration ranging from 32% to 40% by weight. Preferably the composition of the invention comprises one or more compounds selected from monosaccharides, disaccharides, oligosaccharides, and sugar alcohols having a number average molecular weight $\langle M \rangle_n$ ranging from 240 to 350 gram per mole.

Preferably the mixture of the one or more compounds selected from monosaccharides, disaccharides, oligosaccharides, has a number average molecular weight $\langle M \rangle_n$ ranging from 250 to 350 gram per mole, preferably from 270 to 340 gram per mole, preferably from 290 to 330 gram per mole. Preferably the composition of the invention comprises a mixture of monosaccharides, disaccharides, oligosaccharides, and sugar alcohols having a number average molecular weight $\langle M \rangle_n$ ranging from 250 to 350 gram per mole, preferably from 270 to 340 gram per mole, preferably from 290 to 330 gram per mol. The average molecular weight can be obtained by a mix of various sugar sources. Preferably a mixture of lactose from milk solids, sucrose, glucose syrup having a dextrose equivalent (DE) value ranging from 20 to 45 is used. Preferably the composition comprises a glucose syrup having a DE value ranging from 25 to 35, more preferred a DE value ranging from 26 to 30. The composition may also comprise a mixture of glucose syrups with different DE values. The composition preferably also contains a glucose syrup having a DE value ranging from 35 to 45. In particular the higher molecular weight saccharides contribute to the stability of the composition of the invention and the microstructure of the frozen composition. Glucose syrups and corn syrups are considered to be synonyms.

Preferably the relative sweetness of the mixture of the one or more compounds selected from monosaccharides, disaccharides, and oligosaccharides, is maximally 0.22, preferably maximally 0.2, preferably maximally 0.18. Preferably the composition of the invention comprises a mixture of monosaccharides, disaccharides, oligosaccharides, and sugar alcohols having a relative sweetness of maximally 0.22, preferably maximally 0.2, preferably maximally 0.18. This way a mix of sweeteners can be used which does not make the compositions too sweet, while it has the advantage that it contributes to the stability of the liquid composition of the invention and the frozen products.

The composition may contain sugar alcohols, alone or in combination with one or more compounds selected from monosaccharides, disaccharides, and oligosaccharides. Preferably though the maximum concentration of sugar alcohols is maximally 10% by weight of the composition, more preferred maximally 8% by weight of the composition. More preferred the maximum concentration of sugar alcohols is 6% by weight. Alternatively and preferably sugar alcohols are absent from the composition. If present, then preferred sugar alcohols are erythritol, sorbitol, maltitol, lactitol, and xylitol, and more preferred maltitol and erythritol. The composition may also contain soluble fibres like inulin and/or polydextrose and/or oligofructosaccharides in addition to or to replace part of the oligosaccharides.

The total amount of sweeteners is relatively high, therefore also the total solids content is relatively high, it ranges from 30% to 50%. Preferably the total solids concentration ranges from 42% to 48% by weight, preferably from 43% to 47% by weight. The total solids concentration may be at least 35%, more preferably at least 40%, more preferably still at least 43% by weight. The total solids concentration may be at most 49%, more preferably at most 48%, more preferably still at most 47% by weight.

The composition of the invention comprises water-insoluble cellulose-based fibres and one or more water-soluble hydrocolloids to provide an apparent yield stress of at least 1 Pa. Preferably the cellulose-based fibres have been treated to reduce the size of the cellulose-based fibres, and the surface area of the fibres may be increased due to disentanglement of fibrous materials, such that the liquid composition of the invention containing the cellulose-based fibres has an apparent yield stress of at least 1 Pa. Therefore the water-insoluble cellulose-based fibres preferably are obtainable from a process wherein an aqueous suspension of the fibres has been homogenised. Such homogenisation methods are known to the skilled person. Preferably such homogenisation is performed using a high pressure homogeniser. In case such a high pressure homogeniser is used, then typically such device is operated at a pressure ranging from 200 to 500 bar, or from 200 to 400 bar. Preferably such device is operated at a pressure ranging from 200 to 300 bar.

The water-insoluble cellulose-based fibres may be selected from a wide variety of types and forms, however preferably the fibres are plant-derived fibres. The cellulose-based fibres are insoluble in water. Cellulose is found in plants as microfibrils, which typically have a diameter of 2 to 20 nm. These microfibrils form the structurally strong framework in the cell walls of plant materials. Cellulose is a linear polymer of β-(1→4)-D-glucopyranose units. Cellulose molecules typically consist of 2,000 to 14,000 of such units and are completely insoluble in normal aqueous solutions. When dispersed in an aqueous solution, insoluble cellulosic fibres typically bind considerable amounts of water. Cellulosic fibres may contain other fibrous components such as hemicelluloses, pectins and lignin. Typically, such fibres are substantially or completely underivatised. Particularly preferred the water-insoluble cellulosic fibres are natural cellulosic fibres which have not been chemically modified. Preferably the cellulosic fibres are edible cellulosic fibres.

Unlike, for instance, microcrystalline cellulose, the cellulose molecules within the present fibres are essentially non-hydrolysed. Typically, the cellulose molecules contained within the water-insoluble cellulosic fibres employed in accordance with the present invention contain at least 1,000, preferably at least 2,000 β-(1→4)-D-glucopyranose units.

Fibres originating from fruit yield particularly satisfactory results, although the cellulosic fibres may originate from vegetables as well. Preferably the water-insoluble cellulosic fibres employed originate from citrus fruit, tomatoes, carrot, celery, peaches, pears, apples, plumbs or combinations thereof. More preferably, the cellulosic fibres comprise citrus fibres or tomato fruit fibres. More preferred the water-insoluble cellulose-based fibres comprise citrus fibres. Most preferred, the water-insoluble citrus fibres originate from the albedo and/or the flavedo of citrus fruits. Examples of citrus fruits are lemon, lime, pomelo, orange, grapefruit, mandarin, and tangerine. Therefore the fibres of the present invention preferably originate from one or more of these fruits.

The fibres employed in the invention typically have a length of 1 to 200 micrometer. Preferably, the cellulosic fibres have an average length ranging from 5 to 100 micrometer.

Preferably, the concentration of water-insoluble cellulose-based fibres ranges from 0.1% to 2% by weight of the composition. More preferred the concentration of the fibres ranges from 0.1% to 1.5% by weight, more preferred from 0.1% to 1% by weight, more preferred from 0.2% to 0.8% by weight.

A suitable commercially available fibre is for example Herbacel Type AQ Plus Type N, ex Herbafood Ingredients GmbH (Werder (Havel), Germany). These are citrus fibres, and contain not only cellulose, but also water soluble compounds.

Additionally the composition also contains one or more water-soluble hydrocolloids. Preferably, the water-soluble hydrocolloid comprises one or more compounds selected from carboxy-methylcellulose, tara gum, guar gum, locust bean gum, carrageenan, alginate, pectin, and xanthan gum, and combinations of these. More preferred, the water-soluble hydrocolloid comprises one or more compounds selected from carboxy-methylcellulose, tara gum, and guar gum, and combinations of these. The total concentration of water-soluble hydrocolloids preferably ranges from 0.05% to 1% by weight, more preferred from 0.1% to 0.8% by weight. More preferred the water-soluble hydrocolloid comprises carboxy-methylcellulose, preferably having a degree of substitution ranging from 0.5 to 1., preferably from 0.7 to 0.9. Preferably the concentration of carboxy-methylcellulose ranges from 0.05% to 1% by weight of the composition. More preferred the concentration of CMC ranges from 0.05% to 0.8% by weight, more preferred from 0.1% to 0.6% by weight. A suitable commercially available CMC is Grindsted Cellulose Gum Mas 200, ex DuPont Danisco.

Preferably the weight ratio between the fibres and one or more water-soluble hydrocolloids ranges from 10:1 to 1:2, more preferred from 5:1 to 1:1, more preferred from 3:1 to 1.5:1.

The combination of the fibres and the one or more water-soluble hydrocolloids in the composition of the invention provides an apparent yield stress of at least 1 Pa. Preferably they provide an apparent yield stress of at least 2 Pa, preferably at least 3 Pa, more preferably at least 4 Pa, more preferably at least 5 Pa. Preferably the apparent yield stress is maximally 20 Pa, more preferred maximally 15 Pa, more preferred maximally 10 Pa. With apparent yield stress is meant the continuous phase apparent yield stress, meaning that the liquid phase has an apparent yield stress of at least 1 Pa. The yield stress prevents or delays creaming of gas bubbles, in case the composition of the invention contains dispersed gas bubbles. The yield stress is the force required to keep a bubble stationary in the liquid, counteracting the buoyancy. The hydrocolloid can increase the viscosity at zero shear or during flow. On mild agitation (e.g. manually gently shaking), the composition may flow due to shear thinning effect. The apparent yield stress can be determined as described in WO 2007/039064 A1. The dynamic viscosity of the liquid composition preferably ranges from 90 to 200 mPa·s at a shear rate of 0.1 s$^{-1}$ and a temperature of 20°C.

Preferably, the extent of creaming is such that after storage of an aerated composition of the invention during three weeks at 5°C, a visible serum layer lying below the aerated liquid that forms at the bottom of the product container due to the depletion of air bubbles in the region through creaming does not make up more than 15% of the total product height within the container. More preferably it does not make up more than 10% of the total product height within the container. This is preferably measured using a visual method by observing this phenomenon in foams sampled into measuring cylinders.

Preferably the present invention provides a composition in liquid form comprising water;
oil at a concentration ranging from 0.5% to 8% by weight;
milk protein at a concentration ranging from 0.9% to 2.5% by weight;
one or more compounds selected from monosaccharides, disaccharides, and oligosaccharides, at a concentration ranging from 32% to 40% by weight, and
wherein a mixture of the one or more compounds selected from monosaccharides, disaccharides, oligosaccharides, and sugar alcohols has a number average molecular weight <M>n ranging from 240 to 350 gram per mole; and
one or more emulsifiers; and
water-insoluble cellulose-based fibres at a concentration ranging from 0.1% to 2% by weight of the composition and one or more hydrocolloids at a concentration ranging from 0.05% to 1% by weight of the composition; and wherein the total solids content ranges from 30% to 50% by weight. Alternatively the total solids may be at a concentration ranging from 30% to 42% by weight or from 42% to 50% by weight.

The composition of the invention contains one or more emulsifiers. The emulsifiers facilitate the formation and stabilisation of gas bubbles when the composition of the invention is aerated and comprises a dispersed gas phase. In such case, preferably the aerated product will lose no more than 20% of the total overrun when stored at 5°C for 2 weeks. More preferably, the aerated product will lose no more than 10% of the total overrun when stored at 5°C for 2 weeks. The emulsifiers that are present in the composition of the invention as described in here are the only classes of emulsifiers that are added in isolated form to the composition. Preferably the composition does not contain an emulsifier that does not belong to any of these classes that is added to the composition in isolated form. This excludes ingredients that may act as emulsifier and that are added to the composition as an element of other ingredients, such as the oil phase, the protein phase, or other ingredients. For example, the source of oil may naturally contain small amounts of monoglycerides, which can act as emulsifier. Nevertheless, it is not the intention to add such emulsifier which may be present in the oil source. Likewise, a dairy fat source may contain phospholipids that can act as emulsifiers. When dairy fat is added, it is not the intention to add phospholipids which may be present in a source of dairy fat.

Various emulsifiers may be used in the composition of the invention. Preferably the one or more emulsifiers are selected from the group consisting of

monoesters of propylene glycol and a fatty acid; and

organic acid esters of mono- and diglycerides ef fatty acids; and

polyglycerolesters of fatty acids. The composition of the invention may also comprise only one class of emulsifiers selected from the group as specified.

In case the emulsifier comprises one or more organic acid esters of mono- and diglycerides of fatty acids, then preferably these comprise one or more compounds selected from the group consisting of

acetic acid esters of mono- and diglycerides of fatty acids; and

lactic acid esters of mono- and diglycerides of fatty acids; and

citric acid esters of mono- and diglycerides of fatty acids; and

tartaric acid esters of mono- and diglycerides of fatty acids. In case these emulsifiers are the only emulsiers added in isolated form, then preferably the total concentration ranges from 0.2% to 1.4% by weight, preferably from 0.6% to 1.2% by weight. Preferably the emulsifier comprises one or more compounds selected from the group consisting of acetic acid esters of mono- and diglycerides of fatty acids; and lactic acid esters of mono- and diglycerides of fatty acids; and citric acid esters of mono- and diglycerides of fatty acids. More preferred the emulsifier comprises citric acid esters of mono- and diglycerides of fatty acids.

Acetic acid esters of mono- and diglycerides of fatty acids are approved food additives in Europe, with number E472a. In case these compounds are present as the only added emulsifiers, then preferably their concentration ranges from 0.2% to 1.4% by weight, preferably from 0.6% to 1.2% by weight. A suitable commercially available source is the Grindsted Acetem range, ex DuPont Danisco (Copenhagen, Denmark). This is made from fully hydrogenated palm based oil.

Lactic acid esters of mono- and diglycerides of fatty acids are approved food additives in Europe, with number E472b. In case these compounds are present as the only added emulsifiers, then preferably their concentration ranges from 0.2% to 1.4% by weight, preferably from 0.6% to 1.2% by weight. A suitable commercially available source is the Grindsted Lactem range, ex DuPont Danisco (Copenhagen, Denmark). This is made from fully hydrogenated palm based oil.

Citric acid esters of mono- and diglycerides of fatty acids are approved food additives in Europe, with number E472c. In case these compounds are present as the only added emulsifiers, then preferably their concentration ranges from 0.2% to 1.4% by weight, preferably from 0.6% to 1.2% by weight. Such compound is for example available as Grindsted Citrem, from Dupont Danisco (Copenhagen, Denmark), preferably Grindsted Citrem N12. This is a neutralised citric acid ester of mono-di-glycerides made from fully hydrogenated palm based oil.

Tartaric acid esters of mono- and diglycerides of fatty acids are approved food additives in Europe, with number E472d. In case these compounds are present as the only added emulsifiers, then preferably their concentration ranges from 0.08% to 1.4% by weight, preferably from 0.1% to 1.2% by weight. Such compound is for example available from A&Z Food Additives co. (Zhejiang, China).

In case the emulsifier comprises one or more monoesters of propylene glycol and a fatty acid as the only added emulsifier, then preferably the concentration of this emulsifier ranges from 0.2 to 1% by weight, more preferably from 0.25 to 0.8% by weight. Preferred fatty acids are stearate, palmitate, and oleate. Preferably the monoester of propylene glycol and fatty acid comprises propylene glycol monostearate (PGMS). The term PGMS is to be understood as encompassing any type of PGMS isomer. A monoester of propylene glycol and a fatty acid is an approved food additive in Europe, with number E477. Such compound is available as Grindsted® PGMS, ex Dupont Danisco or as Myverol P-09 K ex Kerry Foods (Kerry, Ireland). The advantage of using these compounds, is that an aerated composition according to the invention keeps its structure when stored under chilled conditions (e.g. about 5°C) during a period of about at least 6 to 8 weeks.

Preferably the composition comprises polyglycerol esters of fatty acids as the only class of added emulsifiers. Preferably the polyglycerol moiety is mainly di-, tri- and tetraglycerol, and the iodine value is less than 50% and more preferably less than 20%. Preferably the concentration of this emulsifier ranges from 0.5 to 2% by weight, more preferably from 0.5 to 1%. The advantage of using these compounds, is that an aerated composition according to the invention keeps its structure when stored under chilled conditions (e.g. about 5°C) during a period of about at least 6 to 8 weeks. A suitable source is Grindsted PGE ex DuPont Danisco.

The composition of the invention can be present in an unaerated as well as in an aerated form. With unaerated is meant that the composition has not been intentionally aerated, although a single air or gas bubble may be present in the composition. Preferably such unaerated composition of the invention may be packaged in a closed package. In such case a consumer or anyone else can aerate the composition at the point of use, for example using a hand held mixer or whisker, and subsequently quiescently freeze the aerated composition. A particular advantage of the composition of the invention that the composition can be distributed and stored at ambient temperatures. Also the aerating (e.g. whipping) can be done at ambient temperatures. Usually similar compositions are better whippable when chilled (e.g. to 5°C), caused by a higher content of solid fat crystals at 5°C as compared to 20°C. Such fat crystals may help to stabilise air bubbles. Surprisingly the composition of the invention is well whippable at ambient temperatures.

**Aerated composition in liquid form**

Preferably the composition of the invention is aerated such that the product has a foamy structure and appearance. Aeration can be done with any gas normally used in food products, like air, oxygen, nitrogen, and carbon dioxide. Preferably aeration is done using air or nitrogen. In case the composition has been aerated, then preferably the composition contains gas bubbles at an overrun ranging from 30% to 200%. Preferably the overrun ranges from 30% to 150%. In such case gas bubbles will be dispersed in the continuous liquid phase. Preferably the gas bubbles have an average diameter D4,3 ranging from 5 to 100 micrometer, preferably ranging from 10 to 100 micrometer. Preferably at least 50% of the number of gas bubbles has a diameter smaller than 100 micrometer, more preferred at least 75% of the gas bubbles. Incidentally also larger bubbles may be present.

Preferably such aerated composition is packaged in a closed package. Preferably, the composition is packaged aseptically. Preferably the package is sealed. This way the composition of the invention can be distributed at a temperature above 0°C. Therefore preferably the composition is at a temperature of 0°C or higher, preferably at a temperature of maximally 40°C, preferably maximally 35°C. Preferably a packaged aerated composition according to the invention is at a temperature of 0°C or higher, preferably at a temperature of maximally 40°C, preferably maximally 35°C.

Preferably the composition of the invention is free from ethanol, starch, and hydrophobin.

**Frozen composition**

The packaged aerated composition of the invention can be, by putting the packaged composition in a freezer at a temperature below 0°C. This way the composition will be quiescently frozen, meaning without agitation or aeration during the freezing process, to yield a frozen confection. Preferably the aerated composition of the invention is at a temperature below 0°C, preferably below -5°C, preferably between -10°C and -25°C. Preferably the temperature at which the aerated composition is frozen is maximally -18°C. Preferably the ice content ranges from 30% to 40% by weight at -18°C, preferably from 32% to 39% by weight. This way a quiescently frozen microstructure is prepared, that mimics that of a dynamically frozen confection. The advantage of the invention is that the structure of the frozen composition resembles that of a dynamically frozen composition.

The ice content of the frozen composition is relatively low, and by having this combined with the low protein and fat content, the high total solids content, the specific combination of sugars, a composition is prepared that can be pasteurised when liquid without formation of undesired maillard reaction compounds. Moreover it can be distributed at temperatures above 0°C, and can be quiescently frozen, while providing a good texture, and without becoming too sweet. This way an excellent frozen confection can be prepared by and served to a consumer, without the need of a distribution chain at -18°C or lower. Production and distribution of the aerated liquid composition of the invention can be done at temperatures above 0°C. Consequently this leads to a strong reduction of energy consumption, compared to the traditional supply chain of ice cream.

**Method for preparation of liquid composition**

A method is provided (not part of the invention) for preparation of the liquid composition of the invention. An unaerated liquid composition according to the first aspect of the invention can be prepared using any common equipment usually used for preparing liquid mixtures. The preparation method encompasses preferably four distinct unit operations:

1. Mixing stage - the ingredients of the composition of the invention are brought together, solubilised in water and mixed.
2. Optionally a homogenisation stage - to disperse the fat in small emulsion droplets for stability, at 0 to 150 bar in a high pressure homogenizer.

3. Optionally a heating section for either pasteurisation (for example 80°C for 30 seconds) or sterilisation (for example 140°C or 150°C for 4 to 10 seconds); to achieve longer shelf life/commercial sterility determined by required shelf life.

4. A homogenisation stage - to reduce the size of the larger cellulose-based fibres, and the surface area of the fibres may be increased due to disentanglement of fibrous materials.

A method is provided (not part of the invention) for preparation of a composition according to the first aspect of the invention, comprising the steps:

a) Mixing water, oil, milk protein, one or more compounds selected from monosaccharides, disaccharides, and oligosaccharides, one or more emulsifiers, water-insoluble cellulose-based fibres and one or more water-soluble hydrocolloids;

b) Optionally homogenising the composition from step a);

c) Optionally heating the composition from step a) or b) at a temperature ranging from 70°C to 155°C during a period ranging from 1 minute to 3 seconds;

d) Homogenising the composition from step a), b), or c);

e) Optionally aerating the composition from step d); and

f) Optionally packing the composition from step d) or e) in a container and sealing the container.

In step a) a premix of the composition is prepared in a mixed vessel. Preferably this is done by first mixing the part of saccharides, stabilisers (cellulose-based fibres and water-soluble hydrocolloid) and emulsifiers, and mixing this with heated water, preferably at a temperature of at least 70°C, preferably at least 75°C. Preferably milk protein is added to the mix when the temperature of the mix is lower than 72°C, after which optional glucose syrup is added. Subsequently, oil which is melted may be added and emulsified. The product has not yet been intentionally aerated. Incidentally the composition may contain gas bubbles which may have been included in the composition during the preparation process. In this step oil droplets are dispersed in a continuous aqueous matrix and the hydrocolloid providing yield stress is dispersed. Preferably in this step the oil droplets are have a volume weighted geometric mean diameter $D4,3$ of less than 20 micrometer, preferably less than 15 micrometer. This mean diameter may suitably be determined using the method described by Goudappel et al. (Journal of Colloid and Interface Science 239, p. 535-542, 2001). Typically, 80 to 100% of the total volume of the oil droplets contained in the present emulsion have a diameter of less than 20 micrometer.

In optional step b) the composition is homogenised to make a more homogeneous and smooth premix. Preferred equipment for homogenisation include a high-shear mixer, with an impeller for mixing. Another preferred equipment is a high pressure homogeniser that is used to homogenise, preferably operating at a pressure ranging from 10 to 200 bar, preferably from 20 to 150 bar.

In optional step c) the composition is heated to pasteurise or sterilise the composition. The heating equipment that is used may be any common equipment common to food industry, like a plate heat exchanger or direct steam injection. Preferably the temperature ranges from 80°C to 152°C, and preferably the heating time ranges from 30 seconds to 4 seconds. In case the composition is pasteurised, typical heating time and temperature are 30 seconds at 80°C. In case the composition is sterilised, typical heating time and temperature are 4 seconds at 151°C. A preferred sterilisation condition is 145°C during 4.5 second, as this gives the optimal viscosity of the liquid mixture. Direct heating with steam injection is favourable, as undesired maillard reactions do not seem to occur. Such maillard reactions could lead to browning and development of undesired flavours.

In step d) the composition is homogenised to make a homogeneous and smooth premix. Any suitable method to homogenise can be used, as long as the water-insoluble cellulose-based fibres are treated such that the apparent yield stress of the liquid mixture in this step is more than 1 Pa. Such homogenisation methods are known to the skilled person. Preferably homogenisation is performed using a high pressure homogeniser. In case such a high pressure homogeniser is used, then typically such device is operated at a pressure ranging from 200 to 500 bar, or from 200 to 400 bar. Preferably such device is operated at a pressure ranging from 200 to 300 bar. The temperature of the mixture at which this may be done preferably ranges from 70°C to 150°C, which is the temperature range in the heating step. Preferably the temperature during homogenisation ranges from 70°C to 90°C. After homogenisation the product may be cooled to room temperature or chilled temperatures, above 0°C.

The product viscosity may be increased after this homogenisation step. This is due to the increased functionality of the cellulose-based fibres.

Optionally step c) may be performed between steps d) and e).

In optional step e) the heated composition is aerated to an overrun preferably ranging from 30% to 200%. Preferably the overrun ranges from 30% to 150%. Aeration of the composition may be done as a batch operation, with a mixer which disperses air bubbles in the mixture, or may be done in line, using a continuous aerator. Such aerators operate by continuously passing mix through a reactor head which has a whipping camber composed of a stator and a rotor. Aeration is achieved by injecting the desired level of gas into the incoming premix - gas bubble breakdown and mixing is accomplished through the high speed rotation of the rotor equipped with teeth which pass through narrow gaps formed by additional static teeth mounted on the stator. The temperature of the mixture during aeration preferably ranges from 5°C to 25°C. Preferably the aeration is done aseptically, such that the pasteurised or sterilised composition is not spoiled.

Finally in optional step f) the aerated composition is packaged in a container and then closed or sealed. The temperature of the aerated composition in this step f) preferably ranges from above 0°C to 25°C, preferably from 2°C to 25°C. This way the aerated composition of the invention can be distributed. The package that is used may be any package that is commonly used for liquid food compositions. Preferably the package can withstand temperature below 0°C.

The second aspect of the invention provides a method for preparation of a frozen aerated composition, wherein a composition according to the first aspect of the invention is brought to a temperature below 0°C, preferably below -5°C, preferably between -10°C and -25°C. Preferably the aerated composition of the invention is packaged in a closed container. Preferably the aerated composition is not agitated when brought to a temperature below 0°C, preferably below -5°C, preferably between -10°C and -25°C. That means that preferably the composition is quiescently frozen, which can be done by a consumer in house. The consumer purchases an aerated composition according to the first aspect of the invention, which is packaged in a closed container. The closed container is put in a freezer, to yield a frozen confection. Alternatively the consumer can purchase an unaerated composition, aerate this at home, for example by whipping or shaking, and subsequently quiescently freeze the aerated composition.

**Composition in dried form**

In a further aspect of the invention the water may be removed from the liquid composition of the first aspect to provide a composition that is lighter, easier to transport, and has enhanced microbiological stability. The invention therefore provides a dried composition in which the water has been removed from the liquid composition of the first aspect to provide a water content of less than 10% by weight. Preferably the water content is less than 5% by weight, more preferably less than 4% by weight, more preferably still less than 3% by weight, yet more preferably less than 2% by weight, even more preferably less than 1% by weight. This dried composition is preferably in the form of a powder.

**Method for preparation of composition in dried form**

A method is provided (not part of the invention) for the preparation of the dried composition above. This method comprised only steps a) to d) of the method above (i.e. step a) Mixing water, oil, milk protein, one or more compounds selected from monosaccharides, disaccharides, and oligosaccharides, one or more emulsifiers, water-insoluble cellulose-based fibres and one or more water-soluble hydrocolloids; then step b) Optionally homogenising the composition from step a); then step c) Optionally heating the composition from step a) or b) at a temperature ranging from 70°C to 155°C during a period ranging from 1 minute to 3 seconds; then step d) Homogenising the composition from step a), b), or c);). The method comprises a further step in which the water is removed from the liquid composition. The water is preferably removed by spray drying.

**Method for preparation of liquid composition from composition in dried form**

A method is provided (not part of the invention) for the preparation of a liquid composition according to the first aspect. The method comprised the step of adding water to the dried composition in an amount to achieve a total solids content of from 30% to 50% by weight. This recreated liquid composition can be subsequently aerated and frozen to form an aerated frozen confection by any of the means set out herein above and below. The recreated liquid composition can be treated in exactly the same way as the liquid composition of the first aspect and therefore any preferable features of the original liquid composition apply mutatis mutandis to the recreated liquid composition where relevant.

**DESCRIPTION OF FIGURES**

*Figure 1:* Dynamic viscosity (in Pa.s) as function of shear rate (in $s^{-1}$) of sample A (citrus fibre 0.4%) from example 1; curve 1 unheated control, curve 2 UHT treated.
*Figure 2:* Dynamic viscosity (in Pa.s) as function of shear rate (in $s^{-1}$) of sample B (citrus fibre 0.4% and 0.1% CMC) from example 1; curve 1 unheated control, curve 2 UHT treated.
*Figure 3:* Dynamic viscosity (in Pa.s) as function of shear rate (in $s^{-1}$) of sample C (citrus fibre 0.4% and 0.2% guar gum) from example 1; curve 1 unheated control, curve 2 UHT treated.

*Figure 4:* Dynamic viscosity (in Pa.s) as function of shear rate (in s$^{-1}$) of sample D (citrus fibre 0.4% and 0.2% tara gum) from example 1; curve 1 unheated control, curve 2 UHT treated.

*Figure 5:* Overrun (in %) as function of time (in minutes) for two samples from example 2, aerated at two temperatures:

> curve 1: sample 9075 (citrus fibre/CMC) at 5°C;
> curve 2: sample 9075 (citrus fibre/CMC) at 20°C;
> curve 3: sample 9069 (xanthan) at 5°C;
> curve 4: sample 9069 (xanthan) at 20°C.

## EXAMPLES

The following non-limiting examples illustrate the present invention.

## Raw materials

- Coconut oil: refined ex Cargill.
- Cream: 40%, ex Meadow Foods (Chester, Cheshire, UK).
- Skimmed milk powder, ex Dairy crest (Esher, Surrey, UK).
- Dextrose monohydrate: C-Pharm Dex 02010 ex Cargill.
- Sucrose, ex Tate and Lyle (London, UK).
- Glucose syrup 28DE: spray dried C-Dry GL 01924, ex Cargill.
- Glucose syrup 40DE: spray dried C-Dry GL 01934, ex Cargill.
- Citric acid esters of mono- and diglycerides of fatty acids: Grindsted Citrem N12 ex DuPont Danisco.
- Propylene glycol monostearate (PGMS): Myverol P-09 K ex Kerry Foods.
- Polyglycerol esters of fatty acids (PGE): Grindsted PGE 55 Kosher ex DuPont Danisco. This is made from edible, refined vegetable fatty acid and in which the polyglycerol moiety is mainly di, tri-, and tetra- glycerol. Manufacturers specifications: Iodine value max 2. Saponification value 130-145.
- Xanthan gum: Keltrol F, ex CP Kelco.
- Guar gum, Grindsted Guar 250, ex DuPont Danisco.
- Tara gum: ex Foreign and Domestic chemicals.
- CMC: Carboxy-methylcellulose Grindsted Cellulose Gum Mas 200, ex DuPont Danisco.
- Citrus fibre: Herbacel Type AQ Plus Type N, ex Herbafood Ingredients GmbH (Werder (Havel), Germany).

> DuPont Danisco: from Copenhagen, Denmark; CP Kelco: from Nijmegen, The Netherlands;
> Cargill: from Minneapolis, MN, USA; Kerry Foods: from Kerry, Ireland.

## Example 1: Effect of ultra high temperature on a suspension containing citrus fibres

The effect of UHT treatment on citrus fibres alone, or in combination with carboxy-methylcellulose (CMC), or guar gum, or tara gum were prepared.

A citrus fibre suspension was prepared by heating water to above 70°C and then dry citrus fibre with optionally one of the hydrocolloids was added slowly, while stirring using an overhead stirrer (Silverson LR4 mixer) for 5 to 10 minutes. The pH of the solutions was adjusted to 6.5 using diluted HCl or NaOH. Solutions were cooled to room temperature and stored in sealed containers at 4°C until required. For high pressure homogenisation the suspension was passed though a bench scale Niro Suave high pressure homogeniser. The pressure selected was 600 bar.

The following dispersions were made:

> A: citrus fibre 0.4% in water
> B: citrus fibre 0.4% and 0.1% CMC in water
> C: citrus fibre 0.4% and 0.2% guar gum in water
> D: citrus fibre 0.4% and 0.2% tara gum in water

After homogenisation the compositions were processed using a UHT pilot scale rig Armfield (model FT174X, ex Armfield Ltd., Ringwood, UK), and sterilised at a temperature of 130°C during 38 seconds. The flow rate was approximately 36 L/h.

The rheological properties of the solutions before and after heat treatment were analysed using Anton Paar MCR510 rheometer with a 17mm profiled bob and cup. The sample was equilibrated at 20°C for 5 minutes prior to measurement. A 20 minute scan (10 min forward followed immediately by a 10min back scan) was carried out on the dispersion using cup and bob geometry. Viscosity was recorded as a function of shear stress for the dispersions (initial mix, after homogenisation and after UHT). Viscosity vs. shear rate were plotted for the full mixes (full mix and full mix after UHT).

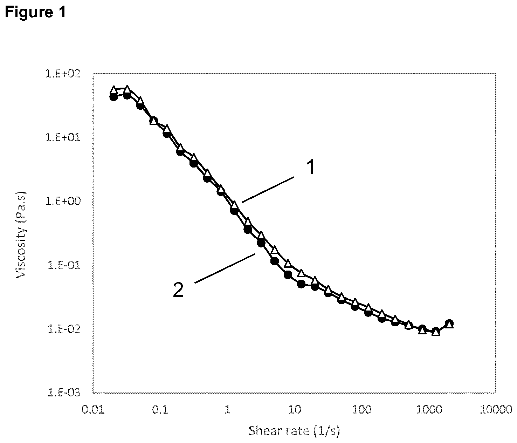

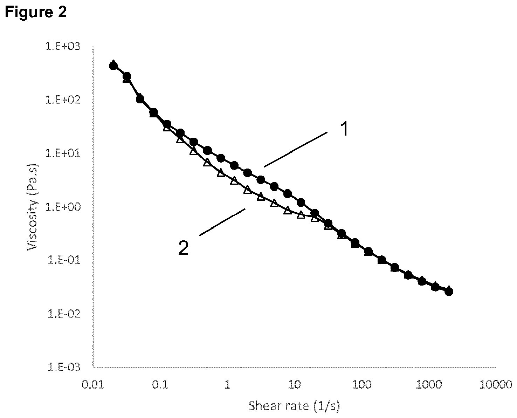

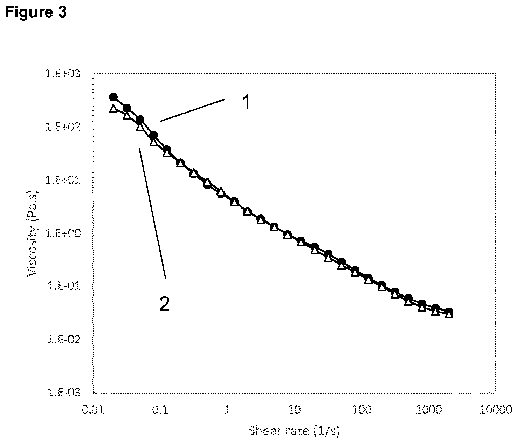

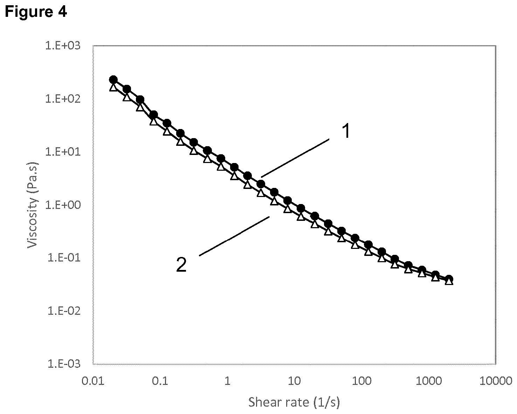

Figure 1 to Figure 4 show the variation of viscosity against shear rate for the fibres after processing through the homogeniser (control) and after processing including homogenization through the UHT line (UHT treated). Inspection of the curves reveals that after the ultra high temperature step no significant changes in rheological properties were observed for either of the mixtures A, B, C, and D. This means that dispersions containing citrus fibres, alone or in combination with carboxy-methylcellulose, or guar gum, or tara gum, are stable against UHT treatment, which means that there has been no compromise to the yield stress properties essential for final product stability.

**Example 2: Aeration of a citrus fibres/CMC/Citrem mix**

Two liquid compositions were prepared having the compositions as in Table 1.

*Table 1 Formulation of liquid composition.*

|  | 9069 [wt%] | 9075 [wt%] |
|---|---|---|
| Skimmed milk powder | 5.62 | 5.62 |
| Coconut oil | 5 | 5 |
| Sucrose | 6.4 | 6.4 |
| Dextrose monohydrate | 12 | 12 |
| Glucose syrup 28 DE | 5.5 | 5.5 |
| Glucose syrup 40 DE | 10.6 | 10.6 |
| flavour | 0.2 | 0.2 |
| xanthan gum | 0.55 | |
| citrus fibre | | 0.4 |
| CMC | | 0.2 |
| Citrem N12 | 1.0 | 1.0 |
| Water | to 100% | to 100% |

The mixtures were prepared by the following process. First dry sugars, emulsifier, and stabilisers, were added to water at 82°C. After 2 minutes stirring, skimmed milk powder was added at 72°C. After 2 minutes mixing, the glucose syrups were added, at 70°C. After 2 minutes mixing, molten coconut oil was added at 65°C. After 8 minutes stirring on high speed to disperse the oil droplets and disperse the stabilisers, flavour was added. Subsequently the mixtures were sterilised at 151 °C for 4 seconds. Mix 9075 was homogenised in two stages using a high pressure homogeniser at pressures of 270 and 30 bar, while mix 9069 was not further homogenised.

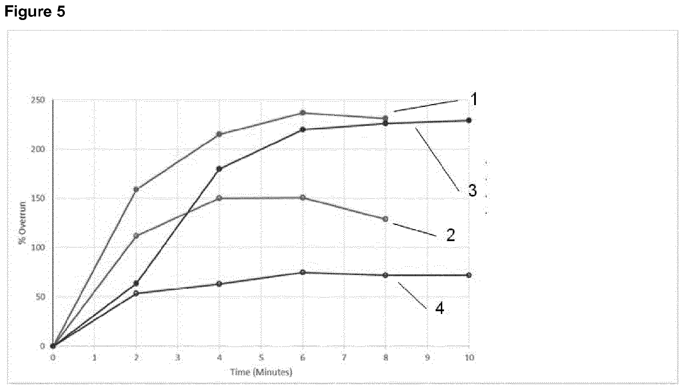

Ideally a mix, if aerated by the consumer should only take a few minutes, and should aerate at a range of temperatures The mixes were aerated using a Kenwood food processor operating at full speed. The overruns for each mix were recorded. Figure 5 shows that for the citrus fibres/CMC mix 100% overrun could be achieved after 2-3 minutes aeration in a standard food processor at 5°C (curve 1). Also the mix with xanthan gum could readily be aerated at 5°C (curve 3), although slower than for the citrus fibre mix. They both reach the same overrun. There is a large difference at 20°C though. The citrus fibres/CMC mix could be aerated to an overrun of about 150% at 20°C (curve 3), which is about twice as high as for the mix with xanthan gum at 20°C (curve 4).

This shows that the mix with citrus fibre and CMC aerates easily over a range of temperatures. Aerating at chill temperatures is preferable as the emulsion contains little liquid fat to act as an antifoam. As an emulsion containing system is warmed, then the level of liquid fat increases and it becomes difficulty to aerate.

Therefore the mix containing citrus fibre and CMC can be distributed unaerated at ambient temperature, and can be aerated by the consumer at ambient temperature. This would be difficult for the mix containing xanthan gum. The citrus fibre stabilised mix gives rise to a better aeration process so this stabiliser compensates for the loss of aeration capacity due to the amount of liquid fat at 20°C.

## Example 3. Stability of aerated liquid compositions with citrus fibre and CMC

The two unaerated liquid compositions from example 2 (both samples sterilised and sample 9075 homogenised) were taken for further aeration using using a WCB inline aerator (WCB Ice Cream, Aarhus, Denmark) to an overrun of about 100%.

After aeration the compositions were stored at 5°C to visually evaluate stability of the foams. The factors assessed were the following:

- Stability of overrun during storage: good when no or very small overrun loss, and bad when severe overrun loss during storage.
- Bubble growth during storage: good when no or very small coarsening of bubbles, and bad when severe coarsening of bubbles during storage.
- Phase separation (bubbles) during storage: good when no or very small creaming of bubbles, and bad when severe creaming of bubbles.
- Phase separation (serum) during storage: good when no or very small formation of serum layer on bottom of container, and bad when thick serum serum layer on bottom of container.

The evaluation of the samples gave the following:

*Table 2 Results of visual assessment of foam stability of aerated samples 9069 and 9075.*

| sample | storage period [days] | overrun stability | bubble growth | phase separation (bubbles) | phase separation (serum) |
|--------|----------------------|-------------------|---------------|----------------------------|--------------------------|
| 9069 | 17 | good | good | good | good |
| | 59 | good | moderate | good | good |
| 9075 | 58 | good | moderate | good | good |

This shows that using citrus fibre in combination with CMC, Citrem, and the specified sugars mix, aerated liquid compositions can be prepared which are stable during at least 58 days on the 4 assessed aspects. During a period of 58 days the foams mainly remain stable, although some of the compositions show some bubble coarsening. Nevertheless, the mixtures are still of acceptable quality in such case. These products can be stored and quiescently frozen to provide good quality frozen confections.

## Example 4. Aerated liquid compositions with PGMS and PGE55.

Two further liquid compositions were prepared having compositions as in Table 3.

*Table 3 Formulation of liquid compositions.*

| | 9073 [wt%] | AE2 [wt%] |
|--------|------------|-----------|
| Skimmed milk powder | 5.62 | 5.62 |
| Coconut oil | 5 | 5 |
| Sucrose | 6.4 | 6.4 |
| Dextrose monohydrate | 12 | 12 |
| Glucose syrup 28 DE | 5.5 | 5.5 |
| Glucose syrup 40 DE | 10.6 | 10.6 |
| Flavour | 0.2 | 0.2 |
| Citrus fibre | 0.4 | 0.4 |
| CMC | 0.2 | 0.2 |
| PGMS | 0.35 | |

(continued)

|  | 9073 [wt%] | AE2 [wt%] |
|---|---|---|
| PGE55 |  | 1 |
| Water | to 100% | to 100% |

These samples were made similarly as in examples 2 and 3. Sample 9073 was heat treated at 141°C for 4 seconds, and sample AE2 was heat treated at 80°C for 30 seconds. Both samples were homogenised in two stages using a high pressure homogeniser at pressures of 270 and 30 bar. The samples were aerated using the WCB inline aerator to an overrun of about 100%.

The stability of the aerated liquids was followed in time, similarly as in example 3. The result was the following:

*Table 4 Results of visual assessment of foam stability of aerated samples 9073 and AE2.*

| sample | storage period [days] | overrun stability | bubble growth | phase separation (bubbles) | phase separation (serum) |
|---|---|---|---|---|---|
| 9073 | 10 | good | moderate | good | good |
|  | 15 | good | moderate | good | good |
|  | 24 | good | moderate | good | good |
|  | 59 | good | moderate | good | good |
| AE2 | 4 | good | good | good | good |

This shows that using citrus fibre in combination with CMC, and either PGMS or PGE55, and the specified sugars mix, aerated liquid compositions can be prepared which are stable during at least 58 days on the 4 assessed aspects. During a period of 58 days the foams mainly remain stable, although there may be some bubble coarsening. This is not worsened though during the nearly two months storage. Nevertheless, the mixtures are still of acceptable quality in such case. These products can be stored and quiescently frozen to provide good quality frozen confections. In case a consumer would like to freeze such an aerated composition which is packed in a closed package, the consumer can shake such composition prior to freezing it, if needed, to yield a good quality ice cream. **Example 5-Preparation of dried composition and comparison of rehydrated dried composition against liquid composition**

In order to demonstrate the acceptability of the rehydrated dried composition the following formulation was provided. Vanilla Flavour was from Symrise AG, Germany.

| Ingredients | Weight (%) |
|---|---|
| Water | 53.082 |
| SMP | 5.62 |
| Coconut Oil | 5 |
| Sucrose | 6.4 |
| Dextrose monohydrate (02001) | 12 |
| Dried Glucose 28DE | 5.5 |
| Dried Glucose 40DE | 10.6 |
| Citrus Fibre | 0.4 |
| Guar gum | 0.2 |
| CITREM | 1 |
| Vanilla Flavour (Material # 693901) | 0.148 |
| Vanilla Flavour (Material # 238944) | 0.05 |
| Total | 100 |
|  |  |

(continued)

| Ingredients | Weight (%) |
|---|---|
| Total solids | 44.96 |
| Average Number Molecular weight of sugars | 297g/mole |

The ingredients were mixed with water in a mixing tank, in a pre-determined order and at the specified temperatures, in a manner similar to that used when preparing the liquid format product. After mixing the mix was homogenised (270/30 bar) and pasteurised (120°C, 4 mins) and then sent, via a high pressure pump (300-350 bar), to the spray drying tower at a flow-rate of 40-45 litres/hour. The Air Inlet Temperature was 112°C and the Outlet Temperature was 60-63°C. The spray dried product was collected at the non-agglomerated stage of the process.

250g of spray dried ice cream powder was added to 250g of chilled (approx. +5°C) water and stirred thoroughly until all the powder was dispersed. The mixture was either whisked immediately (Sample B) or, alternatively, left to stand overnight in chill (approx. +5°C) before whisking the following day (Sample C). The mixture was whisked using an electric hand whisk on maximum speed for a few minutes until the mixture was of a thick creamy consistency such that peaks could be formed. A control sample (Sample A) of ice cream was prepared by taking 500g of the liquid formulation that had been stored at chill and whisking it with an electric hand whisk on maximum speed until the overrun was of a similar value to that achieved with the spray dried products.

Samples were taken for an overrun measurement and then the mixes were transferred to plastic tubs, a lid fitted and the tubs placed in a freezer to freeze overnight (approx. -18°C).

The overruns recorded were: Sample A (Control, liquid product) 157%; Sample B (Spray dried product; whisked immediately) 176%; Sample C (Spray dried product; whisked after standing overnight) 161%.

A competent tasting panel of seven people compared Samples B and C to sample A on the following criteria:

- Finish (Shine)
- Colour intensity (white)
- Firmness to spoon
- Chewiness
- Iceness
- Initial Smoothness
- Coldness
- Slipperiness
- Rate of melt
- Oily Residue
- Aeration
- Final Smoothness
- Overall flavour intensity
- Sweetness
- Off notes

A score of 0 means that Sample B or C scored the same as Control Sample A. A score of less than 0 means that the competent tasting panel deemed Sample B or C to be lower than sample A on a given attribute. A score of more than 0 means that the competent tasting panel deemed Samples B and C to be higher than sample A on a given attribute.

The results are shown in the following table:

| Attribute | Control vs. Sample B | | Control vs. Sample C | |
|---|---|---|---|---|
| | Average | Stdev | Average | Stdev |
| Finish (Shine) | 0.714286 | 0.755929 | 1 | 0.816497 |
| Colour intensity (white) | 1.857143 | 0.899735 | 2 | 0.57735 |
| Firmness to spoon | -1.71429 | 0.48795 | -1.28571 | 0.755929 |
| Chewiness | 0.142857 | 1.573592 | 0.428571 | 2.149197 |
| Iceness | -1.71429 | 1.112697 | -2.57143 | 0.786796 |
| Initial Smoothness | 1.142857 | 1.46385 | 1.857143 | 0.690066 |

**EP 3 217 805 B1**

(continued)

| Attribute | Control vs. Sample B | | Control vs. Sample C | |
|---|---|---|---|---|
| | Average | Stdev | Average | Stdev |
| Coldness | -0.57143 | 1.511858 | -0.85714 | 1.772811 |
| Slipperiness | 1.285714 | 0.95119 | 1.714286 | 0.755929 |
| Rate of melt | 0.857143 | 1.573592 | -0.14286 | 1.345185 |
| Oily Residue | 0.285714 | 1.380131 | 0.714286 | 0.95119 |
| Aeration | 1.571429 | 0.9759 | 1.571429 | 0.9759 |
| Final Smoothness | 1.142857 | 1.46385 | 1.714286 | 0.755929 |
| Overall flavour intensity | 1.142857 | 1.345185 | 0.714286 | 1.603567 |
| Sweetness | 1.142857 | 1.46385 | 1.142857 | 0.899735 |
| Off notes | 0.285714 | 0.95119 | 0.285714 | 0.48795 |

It can therefore be readily appreciated that the frozen aerated confections of Samples B & C (prepared from the dried powder) were equivalent to the frozen aerated confections of Sample A (prepared from the liquid composition). In fact, Samples B & C were actually found to be superior in terms of better finish; better whiteness; ease of spooning; reduced iceness; improved initial smoothness; reduced coldness; enhanced slipperiness; better perception of aeration/mousse-like qualities; better final smoothness; better overall flavour intensity; and better sweetness. In addition the off notes were only very slightly higher than the control.

**Claims**

1.   A composition in liquid form comprising water;
     oil at a concentration ranging from 0.5% to 8% by weight;
     milk protein at a concentration ranging from 0.9% to 2.5% by weight;
     one or more compounds selected from monosaccharides, disaccharides, and oligosaccharides, at a concentration ranging from 32% to 40% by weight, and
     wherein a mixture of the one or more compounds selected from monosaccharides, disaccharides, and oligosaccharides has a number average molecular weight $<M>n$ ranging from 240 to 350 gram per mole; and
     one or more emulsifiers; and
     water-insoluble cellulose-based fibres and one or more water-soluble hydrocolloids to provide an apparent yield stress of at least 1 Pa; and wherein the total solids content ranges from 30% to 50% by weight.

2.   A composition according to claim 1, wherein the mixture of the one or more compounds selected from monosaccharides, disaccharides, oligosaccharides, has a number average molecular weight $<M>n$ ranging from 250 to 350 gram per mole, preferably from 270 to 340 gram per mole, preferably from 290 to 330 gram per mole.

3.   A composition according to claim 1 or 2, wherein the relative sweetness of the mixture of the one or more compounds selected from monosaccharides, disaccharides, and oligosaccharides, is maximally 0.22, preferably maximally 0.2, preferably maximally 0.18.

4.   A composition according to any of claims 1 to 3, wherein the water-insoluble cellulose-based fibres comprise citrus fibres.

5.   A composition according to any of claims 1 to 4, wherein the concentration of water-insoluble cellulose-based fibres ranges from 0.1% to 2% by weight of the composition.

6.   A composition according to any of claims 1 to 5, wherein the water-soluble hydrocolloid comprises one or more compounds selected from carboxy-methylcellulose, tara gum, guar gum, locust bean gum, carrageenan, alginate, pectin, and xanthan gum, and combinations of these.

7. A composition according to claim 6, wherein the water-soluble hydrocolloid comprises carboxy-methylcellulose, preferably having a degree of substitution ranging from 0.5 to 1.

8. A composition according to claim 6 or 7, wherein the concentration of carboxy-methylcellulose ranges from 0.05% to 1% by weight of the composition.

9. A composition according to any of claims 1 to 5, wherein the one or more emulsifiers are selected from the group consisting of
monoesters of propylene glycol and a fatty acid; and
organic acid esters of mono- and diglycerides of fatty acids; and
polyglycerolesters of fatty acids.

10. A composition according to any of claims 1 to 9, containing gas bubbles at an overrun ranging from 30% to 200%.

11. A composition according to claim 10, wherein the composition is packaged in a closed package.

12. A composition according to claim 10 or 11, wherein the composition is at a temperature below 0°C, preferably below -5°C, preferably between -10°C and -25°C.

13. A method for preparation of a frozen aerated composition, wherein a composition according to claim 10 or 11, is brought to a temperature below 0°C, preferably below -5°C, preferably between -10°C and -25°C.

14. A method according to claim 14, wherein the composition is not agitated when brought to a temperature below 0°C, preferably below -5°C, preferably between -10°C and -25°C.

15. A composition according to any of claims 1 to 9 wherein the water has been removed to provide a water content of less than 10 % by weight.


**Patentansprüche**

1. Zusammensetzung in flüssiger Form, umfassend Wasser;
Öl in einer Konzentration im Bereich von 0,5 bis 8 Gewichts-%; Milchprotein in einer Konzentration im Bereich von 0,9 bis 2,5 Gewichts-%; eine oder mehrere Verbindungen, ausgewählt aus Monosacchariden, Disacchariden und Oligosacchariden, in einer Konzentration im Bereich von 32 bis 40 Gewichts-%, und
wobei eine Mischung der einen oder mehreren Verbindungen, ausgewählt aus Monosacchariden, Disacchariden und Oligosacchariden, ein Zahlenmittel des Molekulargewichts <M>n im Bereich von 240 bis 350 Gramm pro Mol aufweist; und
einen oder mehrere Emulgatoren; und
wasserunlösliche Fasern auf Cellulosebasis und ein oder mehrere wasserlösliche Hydrokolloide, um eine scheinbare Fließspannung von mindestens 1 Pa bereitzustellen; und wobei der Gesamtfeststoffgehalt im Bereich von 30 bis 50 Gewichts-% liegt.

2. Zusammensetzung nach Anspruch 1, wobei die Mischung der einen oder mehreren Verbindungen, ausgewählt aus Monosacchariden, Disacchariden, Oligosacchariden, ein Zahlenmittel des Molekulargewichts <M>n im Bereich von 250 bis 350 Gramm pro Mol, bevorzugt von 270 bis 340 Gramm pro Mol, bevorzugt von 290 bis 330 Gramm pro Mol, aufweist.

3. Zusammensetzung nach Anspruch 1 oder 2, wobei die relative Süßkraft der Mischung der einen oder mehreren Verbindungen, ausgewählt aus Monosacchariden, Disacchariden und Oligosacchariden, maximal 0,22, bevorzugt maximal 0,2, bevorzugt maximal 0,18, beträgt.

4. Zusammensetzung nach irgendeinem der Ansprüche 1 bis 3, wobei die wasserunlöslichen Fasern auf Cellulosebasis Zitrusfasern umfassen.

5. Zusammensetzung nach irgendeinem der Ansprüche 1 bis 4, wobei die Konzentration an wasserunlöslichen Fasern auf Cellulosebasis im Bereich von 0,1 bis 2 Gewichts-% der Zusammensetzung liegt.

**6.** Zusammensetzung nach irgendeinem der Ansprüche 1 bis 5, wobei das wasserlösliche Hydrokolloid eine oder mehrere Verbindungen umfasst, die ausgewählt sind aus Carboxymethylcellulose, Taragummi, Guargummi, Johannisbrotkernmehl, Carrageen, Alginat, Pektin und Xanthangummi und Kombinationen von diesen.

**7.** Zusammensetzung nach Anspruch 6, wobei das wasserlösliche Hydrokolloid Carboxymethylcellulose umfasst, bevorzugt mit einem Substitutionsgrad im Bereich von 0,5 bis 1.

**8.** Zusammensetzung nach Anspruch 6 oder 7, wobei die Konzentration an Carboxymethylcellulose im Bereich von 0,05 bis 1 Gewichts-% der Zusammensetzung liegt.

**9.** Zusammensetzung nach irgendeinem der Ansprüche 1 bis 5, wobei der eine oder die mehreren Emulgatoren ausgewählt sind aus der Gruppe bestehend aus
Monoestern von Propylenglycol und einer Fettsäure; und
organischen Säureestern von Mono- und Diglyceriden von Fettsäuren; und Polyglycerinestern von Fettsäuren.

**10.** Zusammensetzung nach irgendeinem der Ansprüche 1 bis 9, die Gasblasen mit einem Luftaufschlag im Bereich von 30 % bis 200 % enthält.

**11.** Zusammensetzung nach Anspruch 10, wobei die Zusammensetzung in einer geschlossenen Packung verpackt ist.

**12.** Zusammensetzung nach Anspruch 10 oder 11, wobei die Zusammensetzung bei einer Temperatur unter 0 °C, bevorzugt unter -5 °C, bevorzugt zwischen -10 °C und -25 °C, vorliegt.

**13.** Verfahren zur Herstellung einer gefrorenen lufthaltigen Zusammensetzung, wobei eine Zusammensetzung nach Anspruch 10 oder 11 auf eine Temperatur unter 0 °C, bevorzugt unter -5 °C, bevorzugt zwischen -10 °C und -25 °C, gebracht wird.

**14.** Verfahren nach Anspruch 14, wobei die Zusammensetzung nicht gerührt wird, wenn sie auf eine Temperatur unter 0 °C, bevorzugt unter -5 °C, bevorzugt zwischen -10 °C und -25 °C, gebracht wird.

**15.** Zusammensetzung nach irgendeinem der Ansprüche 1 bis 9, wobei das Wasser entfernt wurde, um einen Wassergehalt von weniger als 10 Gewichts-% bereitzustellen.

**Revendications**

**1.** Composition dans une forme liquide comprenant de l'eau ;
de l'huile à une concentration de 0,5 % à 8 % en masse ;
une protéine de lait à une concentration de 0,9 % à 2,5 % en masse ;
un ou plusieurs composés choisis parmi des monosaccharides, disaccharides, et oligosaccharides, à une concentration de 32 % à 40 % en masse, et
dans laquelle un mélange des un ou plusieurs composés choisis parmi des monosaccharides, disaccharides, et oligosaccharides présente une masse moléculaire moyenne en nombre $<M>_n$ de 240 à 350 grammes par mole ; et
un ou plusieurs émulsifiants ; et
des fibres à base de cellulose insoluble dans l'eau et un ou plusieurs hydrocolloïdes solubles dans l'eau pour fournir une limite apparente d'élasticité d'au moins 1 Pa ; et dans laquelle la teneur totale en solides est de 30 % à 50 % en masse.

**2.** Composition selon la revendication 1, dans laquelle le mélange des un ou plusieurs composés choisis parmi des monosaccharides, disaccharides, oligosaccharides, présente une masse moléculaire moyenne en nombre $<M>_n$ de 250 à 350 grammes par mole, de préférence de 270 à 340 grammes par mole, de préférence de 290 à 330 grammes par mole.

**3.** Composition selon la revendication 1 ou 2, dans laquelle le pouvoir sucrant relatif du mélange des un ou plusieurs composés choisis parmi des monosaccharides, disaccharides, et oligosaccharides, est au maximum de 0,22, de préférence au maximum de 0,2, de préférence au maximum de 0,18.

**4.** Composition selon l'une quelconque des revendications 1 à 3, dans laquelle les fibres à base de cellulose insoluble dans l'eau comprennent des fibres d'agrumes.

5. Composition selon l'une quelconque des revendications 1 à 4, dans laquelle la concentration en fibres à base de cellulose insoluble dans l'eau est de 0,1 % à 2 % en masse de la composition.

6. Composition selon l'une quelconque des revendications 1 à 5, dans laquelle l'hydrocolloïde soluble dans l'eau comprend un ou plusieurs composés choisis parmi carboxy-méthylcellulose, gomme de tara, gomme guar, gomme de caroube, carraghénane, alginate, pectine, et gomme xanthane, et combinaisons de ceux-ci.

7. Composition selon la revendication 6, dans laquelle l'hydrocolloïde soluble dans l'eau comprend de la carboxy-méthylcellulose, ayant de préférence un degré de substitution de 0,5 à 1.

8. Composition selon la revendication 6 ou 7, dans laquelle la concentration en carboxy-méthylcellulose est de 0,05 % à 1 % en masse de la composition.

9. Composition selon l'une quelconque des revendications 1 à 5, dans laquelle les un ou plusieurs émulsifiants sont choisis dans le groupe consistant en monoesters de propylène glycol et d'un acide gras ; esters d'acides organiques de mono- et diglycérides d'acides gras ; et polyglycérolesters d'acides gras.

10. Composition selon l'une quelconque des revendications 1 à 9, contenant des bulles de gaz à un dépassement de 30 % à 200 %.

11. Composition selon la revendication 10, dans laquelle la composition est emballée dans un emballage fermé.

12. Composition selon la revendication 10 ou 11, dans laquelle la composition est à une température inférieure à 0°C, de préférence inférieure à -5°C, de préférence de -10°C à -25°C.

13. Procédé pour la préparation d'une composition aérée congelée, dans lequel une composition selon la revendication 10 ou 11, est amenée à une température inférieure à 0°C, de préférence inférieure à -5°C, de préférence de -10°C à -25°C.

14. Procédé selon la revendication 14, dans lequel la composition n'est pas agitée lorsque amenée à une température inférieure à 0°C, de préférence inférieure à -5°C, de préférence de -10°C à -25°C.

15. Composition selon l'une quelconque des revendications 1 à 9, dans laquelle l'eau a été éliminée pour fournir une teneur en eau inférieure à 10 % en masse.

**Figure 1**

**Figure 2**

**Figure 3**

**Figure 4**

**Figure 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2012110376 A1
- WO 2014029574 A1
- WO 2008009616 A2
- WO 2008009617 A1
- WO 2008009618 A2
- WO 2008009623 A1
- WO 2012016852 A2
- WO 9823169 A
- ZA 9810254
- US 4264637 A
- US 3993793 A
- US 5789004 A
- WO 2009019088 A1
- WO 2007112504 A1
- WO 2005115163 A1
- WO 2013109721 A1
- EP 1676486 A1
- WO 2007039064 A1

### Non-patent literature cited in the description

- **DERVISOGLU et al.** *Food Sci. Tech. Int.,* 2006, vol. 12 (2), 159-164
- **J. CHIRIFE et al.** *Journal of Food Engineering,* 1997, vol. 33, 221-226
- **GOUDAPPEL et al.** *Journal of Colloid and Interface Science,* 2001, vol. 239, 535-542